Europäisches Patentamt

European Patent Office

Office européen des brevets

(19)

(11) Publication number: **0 182 434**
**B1**

## EUROPEAN PATENT SPECIFICATION

(45) Date of publication of patent specification: **17.05.89**

(51) Int. Cl.⁴: **A 23 N 7/00, A 23 N 7/02**

(21) Application number: **85201860.5**

(22) Date of filing: **12.11.85**

(54) A steam peeling apparatus.

(30) Priority: **13.11.84 NL 8403463**

(43) Date of publication of application:
**28.05.86 Bulletin 86/22**

(45) Publication of the grant of the patent:
**17.05.89 Bulletin 89/20**

(84) Designated Contracting States:
**AT BE CH DE FR GB IT LI LU NL SE**

(56) References cited:
**BE-A- 769 327**
**GB-A-1 566 950**
**GB-A-2 038 166**

(73) Proprietor: **GOUDSCHE MACHINEFABRIEK B.V.**
**Kattensingel 21,**
**NL-2801 CA Gouda (NL)**

(72) Inventor: **Van der Schoot, Peter Willem Carolus**
**Liesveld 3**
**NL-2964 AG Groot-Ammers (NL)**

(74) Representative: **Smulders, Theodorus A.H.J., Ir.**
**et al**
**Vereenigde Octrooibureaux Nieuwe Parklaan**
**107**
**NL-2587 BP 's-Gravenhage (NL)**

Courier Press, Leamington Spa, England.

## Description

This invention relates to a steam peeling or cooking apparatus for products, such as potatoes, carrots, celeriac, red beets, Swedish turnips, apples and the like, comprising a substantially cylindrical peeling vessel including supply and discharge conduits for medium, in particular steam, and having closable supply and discharge openings, said vessel being divided into two compartments by a grid-like screen arranged substantially at right angles to the axis of the peeling vessel, the compartment not being in direct contact with the product supply opening forming a condensate chamber and including a closable discharge opening for product and/or condensate, said apparatus further including means for agitating the product during operation, the grid-like screen being fixedly secured to the vessel and having an opening which, in operation, is closed by a grid-like valve.

In such an apparatus, the total cycle time is determined on the one hand by the actual steaming time of the produce (this is a produce-dependent time) and on the other hand by a produce-independent time (sometimes referred to as the dead time), being the time needed for filling, emptying, valve movement, steam blow-off and the like.

The produce-dependent time is a fixed datum, so when a shorter cycle time is desired, it should be tried to shorten the produce-independent time: it should be borne in mind that the total cycle time is as short as about 60 seconds and consists as to at most half of produce-dependent time.

Major drawbacks of the prior art apparatus are: the time for filling and emptying the peeling vessel necessitates a drive mechanism with bearing etc. Since a peeling vessel of several tons is concerned here, a heavy drive mechanism with fittings is necessary, by means of which fittings steam can be supplied and discharged. In order to avoid unduly expensive bearings, rotary stuffing box etc., the diameter of the steam supply and discharge line traversing the bearings should be limited. This implies that steam blow-off cannot take place in an optimal i.e. explosive manner. Yet this is desirable in order to ensure that the peel is released and blown off already during steam blow-off. Moreover, explosive or rapid steam blow-off will also ensure that the temperature in the vessel falls rapidly, which reduces the permeation of heat into the product and results in a minimum thickness of the so-called cook ring. By cook ring is understood that portion of fruit or vegetable which has been in contact with steam. This softer portion will be partly removed with the peel and if too thick will result in undue product losses and waste water contamination. The longer the produce is in contact with steam, the greater will be the depth of steam penetration and hence the cook ring thickness. It will be clear, therefore, that after the actual steaming time required for peel removal, the steam is to be discharged as quickly as possible in order to minimize the cook ring thickness.

An apparatus as disclosed in the first paragraph of this patent application has been described in applicants' Dutch patent application no. 7611024 which corresponds with British patent no. 1,566,950. In this known apparatus the peeling vessel has to be rotated about its longitudinal axis for a short time for ensuring that the product is steamed on all sides. As a result, time is lost by the necessity of rotation of the vessel in operation. The latter, moreover, increases the cost price and extends the blow-off time.

It is an object of the present invention to provide a peeling vessel of improved efficiency and increased capacity and yet to realize a major reduction in cost price.

To this end according to the invention, a peeling vessel of the above described type is characterized in that the peeling vessel is substantially stationary in operation and at least one agitator member, e.g. a stirring arm, is arranged in the vessel, a discharge stub is disposed at the lowest point of the condensate chamber and includes a closable discharge opening and in that the grid-like valve is movable perpendicularly to the plane of the grid.

In a further embodiment of the present invention, the discharge stub has a closable product passage as well as a separate closable condensate discharge opening. In this embodiment the condensate discharge opening can be disposed at a lateral location of the discharge stub.

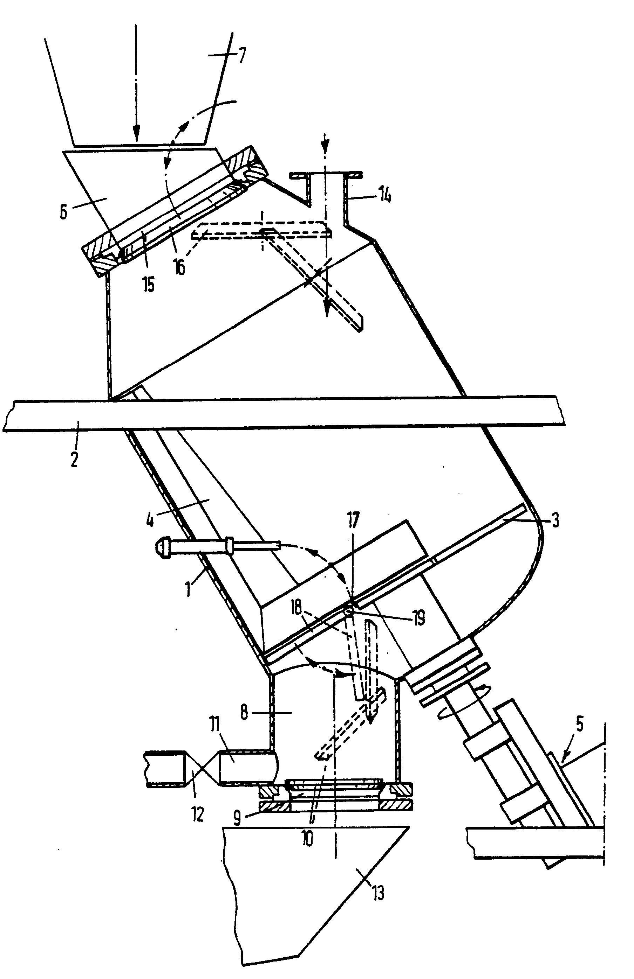

One embodiment of the peeling vessel according to the present invention will now be described, by way of example, with reference to the accompanying drawing, showing a diagrammatical cross-section.

According to the drawing, a stationary peeling vessel 1 mounted on a support 2 includes a grid 3 dividing said vessel into two compartments, i.e. a lower condensate compartment and an upper produce treating compartment. The upper produce treating compartment contains a stirring arm 4 driven by a drive mechanism 5 shown diagrammatically. A similar construction is described in Applicants' prior patent application 78,12678, corresponding to US patents 4,393,756 and 4,478,863, so that with regard to further details reference is made to these publications.

The top of the peeling vessel includes a funnel 6, likewise described in the above publications. The drawing shows above funnel 6 a funnel-shaped outlet 7 of a hopper, not shown, for the produce to be steamed.

The lower end of the peeling vessel, contiguous with the condensate chamber, includes a discharge stub 8 having at its lower end a produce outlet 9 closable by a valve 10: the construction shown is described in detail in the aforementioned publications.

The discharge stub 9, just above the produce outlet 9, links up laterally with a condensate outlet 11 having a shut-off device 12, e.g. of the type as described in Applicants' Dutch patent application 84.00650.

Disposed under discharge stub 8, is a discharge funnel 13, shown diagrammatically, wherein the steamed produce can be collected and possibly delivered for further treatment to e.g. a brush conveyor, as described e.g. in Applicants' US patent 4,242,952.

The peeling vessel further includes a steam supply and discharge stub 14, which will not be further described, as such valved steam supply and discharge stubs or lines are well known and are described e.g. in the aforementioned publications of Applicants.

As also shown in the drawing, the produce supply opening 15 of peeling vessel 1 includes a shut-off valve 16 operated in such a manner that it can perform the movement in the peeling vessel indicated by dashed lines: as a result, a maximum degree of filling is obtained. This is described in Applicants' Dutch patent application 83,03867, counterparts of which have been filed in the USA and Canada.

The above valve 10 is similarly adapted to perform corresponding movements: these too, are shown in the drawing by dashed lines.

Grid 3, at its lowest portion, includes a passage or outlet 17 wherein there is provided a likewise grid-like valve 18 pivoting about a shaft 19. Shaft 19 is outwardly extended on one side of the peeling vessel and is driven by a diagrammatically shown piston-and-cylinder assembly 20.

The operation of the apparatus will be clear after the above description. After the filling of the peeling vessel 1 from the outlet 7, the valve 16 is closed. Subsequently, steam is supplied into the vessel through stub tube 14, in which vessel the produce is kept in motion by means of the stirring arm 4. After a pre-determined steaming time, the steam is discharged again through the steam supply and discharge stub 14.

The condensate being collected during the steaming operation underneath grid 3 is removed during and/or after the steaming operation through the condensate outlet 11. After the condensate has been removed, first the produce outlet valve 10 and then the grid-shaped valve 18 are opened, allowing the steamed produce to fall into funnel 13 and to be discharged further.

After all produce has been removed, the grid-shaped valve 18 and valve 10 are closed, and valve 16 is opened for supplying a fresh batch.

The construction above described has the advantage that a steam inlet and outlet of large diameter can be used, so that a rapid supply and discharge of steam can be effected.

As the peeling vessel no longer needs to be tilted now, all times required therefor become superfluous, so that the cycle time can be shortened substantially. Moreover, the apparatus can have a substantially simpler, and hence less expensive, design owing to the absence of all elements required for tilting and, as a result, is more reliable in operation. Naturally, there is the necessity on the other hand of fitting the apparatus with additional produce discharge means with valved outlet and valve, as well as means for the operation of the latter. However, these are substantially cheaper than the abovementioned means.

It will be clear that a great many modifications are possible within the scope of the present invention as defined by the claims.

## Claims

1. A steam peeling or cooking apparatus for products, such as potatoes, carrots, celeriac, red beets, Swedish turnips, apples and the like, comprising a substantially cylindrical peeling vessel (1) including supply (14) and discharge (11) conduits for medium, in particular steam, and having closable supply (15) and discharge (17) openings, said vessel being divided into two compartments by a grid-like screen (3) arranged substantially at right angles to the axis of the peeling vessel, the compartment not being in direct contact with the product supply opening (15) forming a condensate chamber and including a closable (10) discharge opening (9) for product and/or condensate, said apparatus further including means (4, 5) for agitating the product during operation, the grid-like screen being fixedly secured to the vessel and having an opening (17) which, in operation, is closed by a grid-like valve (18), characterized in that the peeling vessel is substantially stationary in operation and at least one agitator member, e.g. a stirring arm (4), is arranged in the vessel, a discharge stub (8) is disposed at the lowest point of the condensate chamber and includes the closable discharge opening (9) and in that the grid-like valve is movable perpendicularly to the plane of the grid.

2. A steam peeling apparatus according to claim 1, characterized in that the stub (8) includes separate product and condensate discharge openings (9, 11).

3. A steam peeling apparatus according to claim 2, characterized in that said condensate discharge opening (11 is disposed at a lateral location of the discharge stub (8).

### Patentansprüche

1. Dampfschäler oder Kochvorrichtung für Produkte, wie Kartoffeln, Karotten, Sellerie, Rote Beete, Schwedische Steckrüben, Äpfel und dergleichen, enthaltend ein praktisch zylindrisches Schälgefäß (1) einschließlich Einfüll(14) und Auslaßleitungen (11) für Medium, insbesondere Dampf, und verschließbaren Einfüll- (15) und Auslaßöffnungen (17), wobei dieses Gefäß durch einen gitterförmigen Rost (3), der praktisch rechtwinklig zur Achse des Schälgefäßes angeordnet ist, in zwei Abteilungen geteilt ist, wobei das Abteil, das nicht in direktem Kontakt mit der Produkteinfüllöffnung (15) seht, eine Kondensatkammer bildet und eine verschließbare (10) Auslaßöffnung (9) für Produkt und/oder Kondensat umfaßt und die Vorrichtung weiter Mittel (4, 5) zum Bewegen des Produktes während des Betriebs umfaßt und der gitterförmige Rost fest an dem Gefäß befestigt ist und eine Öffnung (17) hat, die im Betrieb durch ein gitterförmiges Ventil (18) geschlossen ist, dadurch gekennzeichnet, daß das Schälgefäß im Betrieb praktisch stationär ist und wenigstens ein Bewegungsglied, z.B. ein Rührarm (4) im Gefäß ahgeordnet ist, ein Auslaßstutzen (8) am untersten Punkt der Kondensatkammer angeordnet ist, der eine verschließbare Auslaßöffnung (9) umfaßt und daß das gitterförmige Ventil senkrecht zur Ebene des Gitters beweglich ist.

2. Dampfschäler nach Anspruch 1, dadurch gekennzeichnet, daß der Stutzen (8) getrennte Produkt-und Kondensatauslaßöffnungen (9, 11) umfaßt.

3. Dampfschäler nach Anspruch 2, dadurch gekennzeichnet, daß die Kondensatauslaßöffnung (11) seitlich am Auslaßstutzen (8) angeordnet ist.

**Revendications**

1. Dispositif de cuisson ou d' épluchage à la vapeur de produits tels que pommes de terre, carottes, céleris-raves, bettraves rouges, choux-navets, pommes et similaires qui comprend une enceinte d'épluchage (1) sensiblement cylindrique munie de conduits d'alimentation (14) et d'évacuation (11) pour un agent, en particulier de la vapeur et comportant des ouvertures obturables d'alimentation (15) et d'évacuation (17), ladite enceinte étant divisée en deux compartiments par un écran en forme de grille (3) disposé sensiblement à angle droit par rapport à l'axe de l'enceinte d'épluchage, le compartiment qui n'est pas au contact direct de l'ouverture d'alimentation du produit (15) formant une chambre de condensat et comportant une ouverture d'évacuation (9) pouvant être obturée (10) pour le produit et/ou le condensat, ce dispositif comportant en outre des moyens (4,5) pour agiter le produit pendant le fonctionnement, l'écran en forme de grille étant fixé de manière non amovible à l'enceinte et comportant une ouverture (17), qui, lors du fonctionnement, est fermée par une valve en forme de grille (18), caractérisé en ce que l'enceinte d'épluchage est sensiblement fixe lors du fonctionnement et on dispose au moins un élément agitateur, par exemple un bras agitateur (4) dans l'enceinte, une conduite d'évacuation (8) est disposée au point le plus bas de la chambre de condensat et elle comporte l'ouverture d'évacuation (9) pouvant être obturée et en ce que la valve en forme de grille est mobile perpendiculairement au plan de la grille.

2. Dispositif d'épluchage à la vapeur selon la revendication 1 caractérisé en ce que la conduite (8) comporte des ouvertures séparées pour l'évacuation du produit et du condensat (9, 11).

3. Dispositif d'épluchage à la vapeur selon la revendication 2 caractérisé en ce que l'ouverture d'évacuation du condensat (11) est disposée en un emplacement latéral de la conduite d'évacua-tion (8).